# EUROPÄISCHE PATENTSCHRIFT

(11) **EP 3 104 983 B1**
(45) Veröffentlichungstag und Bekanntmachung des Hinweises auf die Patenterteilung: **06.06.2018**
(21) Anmeldenummer: 15703965.2
(22) Anmeldetag: 05.02.2015
(51) Int. Cl.: B06B 3/00, B29C 65/08, B29C 65/00

(54) **SONOTRODE MIT AUFDICKUNG**
SONOTRODE WITH THICKENED PORTION
SONOTRODE COMPORTANT UNE SURÉPAISSEUR

(30) Priorität: 13.02.2014 DE 102014101856
(43) Veröffentlichungstag der Anmeldung: 21.12.2016
(73) Patentinhaber: Herrmann Ultraschalltechnik GmbH & Co. Kg, 76307 Karlsbad (DE)
(72) Erfinder: VOGLER, Ulrich, 88690 Uhldingen-Mühlhofen (DE); ZENDLER, Stefan, 75334 Straubenhardt (DE)
(74) Vertreter: WSL Patentanwälte Partnerschaft mbB
(86) Internationale Anmeldenummer: PCT/EP2015/052427
(87) Internationale Veröffentlichungsnummer: WO 2015/121149

(56) Entgegenhaltungen:
- US-A- 5 697 035
- US-A- 5 707 483
- US-A1- 2006 144 906
- US-A1- 2010 040 903
- US-A1- 2010 212 470

## Beschreibung

Die vorliegende Erfindung betrifft eine Sonotrode mit einem radförmigen Abschnitt mit einer Radachse und einem Durchmesser d, der zwei im Wesentlichen kreisförmige Hauptflächen und eine, die Hauptflächen verbindende, im Wesentlichen zylinderförmige Siegelfläche der Breite b aufweist.

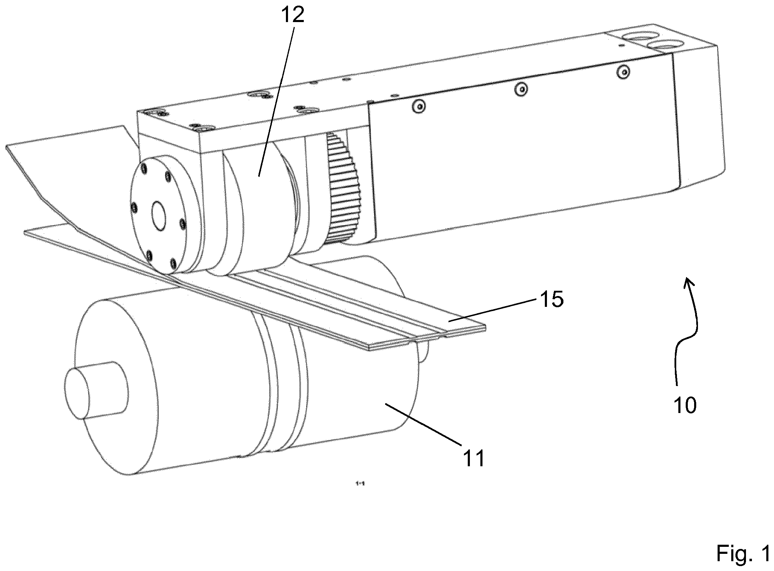

Solche Sonotroden sind aus den Dokumente US5707483, US2006144906, US2010040903 und US5697035 bekannt. Sie werden beispielsweise zur kontinuierlichen Ultraschallbearbeitung von Materialbahnen eingesetzt. Figur 1 skizziert eine solche Ultraschallbearbeitungsmaschine 10.

Der Sonotrode 12 wird eine Radialschwingung aufgeprägt und sie wird während der Bearbeitung um ihre Radachse gedreht, so dass die Umfangsgeschwindigkeit mit der Bahnvorschubgeschwindigkeit übereinstimmt.

Die Sonotrode 12 arbeitet während der Materialbearbeitung mit einem gegenüberliegenden Gegenwerkzeug 11 zusammen, so dass die zu bearbeitenden Materialbahnen 15 zwischen Gegenwerkzeug 11 einerseits und Sonotrode 12 andererseits hindurchbewegt werden. Dabei wird in der Regel mit der Sonotrode 12 und dem Gegenwerkzeug 11 eine Schweißkraft auf das zu bearbeitende Material 15 aufgebracht. Das Material 15 kommt mit der zylinderförmigen Siegelfläche der Breite b in Kontakt und wird mit Ultraschall beaufschlagt. Die zylinderförmige Siegelfläche und/oder die korrespondierende Siegelfläche des Gegenwerkzeuges kann strukturiert ausgebildet sein, d.h. es können eine Vielzahl von Vorsprüngen vorgesehen sein, die für eine Strukturierung des zu bearbeitenden Materials sorgen.

Um eine möglichst optimale Ultraschallbearbeitung zu erreichen, wird in der Sonotrode eine stehende Zylinderwelle angeregt, das heißt die Sonotrode weist eine Resonanzfrequenz auf, bei der sich eine stehende Zylinderwelle in der Sonotrode ausbildet, so dass das Schwingungsmaximum der stehenden Welle auf der Siegelfläche liegt. Mit anderen Worten schwingt die Sonotrode, wenn sie mit dieser Resonanzfrequenz angeregt wird, derart, dass die im Wesentlichen zylinderförmige Siegelfläche mit einer Ultraschallfrequenz in radialer Richtung schwingt, so dass sich die Siegelfläche zwischen einer Position mit größerem Durchmesser und einer Position mit kleinerem Durchmesser hin- und herbewegt. Die Ultraschallschwingung breitet sich senkrecht zu der Radachse in radialer Richtung aus.

Diese stehende Radialschwingung ist die Hauptfrequenz (HF) für diese Art von Sonotroden. Sie wird für eine effektive Ultraschallbearbeitung angeregt und genutzt.

Allerdings gibt es auch weitere Resonanzen, die zu nicht gewünschten Schwingungszuständen führen.

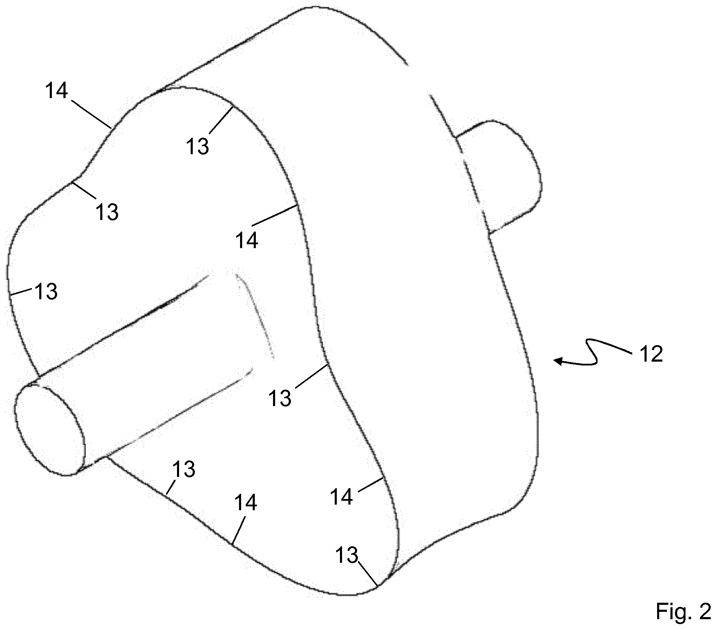

So ist es beispielsweise möglich, die sogenannte Dreiecksfrequenz (DF) anzuregen, bei der sich in Umfangsrichtung auf der Siegelfläche eine stehende Welle mit sechs Schwingungsknoten und sechs Schwingungsmaxima ergibt. Eine schematische Darstellung dieser Schwingungsmode ist in Figur 2 gezeigt. Die radförmige Sonotrode 12 wird bei Anregung der Dreiecksfrequenz verformt, in dem die mit der Bezugszahl 13 bezeichneten Schwingungsmaxima derart zwischen einer radial weiter innen liegenden Position und einer radial weiter außen liegenden Position hin- und herschwingen, dass benachbarte Schwingungsmaxima entgegengesetzt schwingen, d.h. wenn ein Punkt an seiner radial weiter innen liegenden Position ist, befinden sich beide benachbarten Punkte an ihren radial weiter außen liegenden Positionen. Jeweils zwischen zwei Schwingungsmaxima 13 liegt ein Schwingungsknoten 14, an dem die Schweißfläche nahezu keine Bewegung in radialer Richtung durchführt. Diese Schwingungsmode ist beispielsweise in der WO 2004/060581 beschrieben worden.

Diese Schwingung ist für die Ultraschallbearbeitung von Materialien unerwünscht, da dies zu einem nicht homogenen Energieübertrag an der Siegelfläche führt, da im Bereich der Schwingungsknoten viel weniger Energie in radialer Richtung übertragen wird als im Bereich der Schwingungsmaxima. Dennoch lässt es sich nicht vollends vermeiden, dass die Dreiecksfrequenz mit angeregt wird und im Ergebnis sich ein Schwingungszustand ausbildet, der durch eine Überlagerung der Hauptschwingung und der Dreiecksschwingung gekennzeichnet ist. Auch bei diesem überlagerten Schwingungszustand variiert die Schwingungsamplitude in Umfangsrichtung, so dass das Schweißergebnis schlechter ist als bei Anregung ausschließlich der Hauptfrequenz.

Um die Anregung der Dreiecksmode gering zu halten, ist es daher von Vorteil, wenn die Eigenfrequenz der Dreiecksmode möglichst weit von der Eigenfrequenz der eigentlich gewünschten Hauptmode entfernt ist. Wird nämlich die Dreiecksfrequenz mit angeregt, so führt dies nicht nur zu einer ungleichmäßigen Übertragung der Ultraschallenergie, sondern - aufgrund nicht zu vermeidender Kopplung zwischen den Anregungsmodi - zu Schwingungsfrequenzen im hörbaren Bereich. Die Kopplung der Modi führt nämlich zu einer Schwingung, deren Frequenz durch die Differenz zwischen der Hauptfrequenz und der Dreiecksfrequenz bestimmt wird. Liegt diese im hörbaren Bereich, so kann während der Ultraschallbearbeitung ein unerwünschter Ton erzeugt werden, der möglicherweise zu erhöhten Anforderungen an den Gehörschutz führt.

In der EP 0 457 187 A2 sind eine Vielzahl von unterschiedlichen Sonotroden dargestellt. In Figur 13 der EP 0 457 187 A2 ist eine Sonotrode mit einem radförmigen Abschnitt und einer keilförmig ausgebildeten Siegelfläche gezeigt. Die Hauptflächen dieser Sonotrode sind konkav ausgebildet.

Es ist daher Aufgabe der vorliegenden Erfindung, eine Sonotrode anzugeben, bei der die Dreiecksfrequenz sich deutlich von der Hauptfrequenz unterscheidet. Es hat sich gezeigt, dass bei der Anregung der Hauptfrequenz eine stärkere Kopplung zur Dreiecksfrequenz besteht, wenn die Dreiecksfrequenz tiefer als die Hauptfrequenz ist. Ist hingegen die Dreiecksfrequenz höher als die Hauptfrequenz, so ist die Kopplung deutlich geringer. Ziel ist daher eine Sonotrode, bei der die Dreiecksfrequenz möglichst höher als die Hauptfrequenz liegt.

Erfindungsgemäß wird diese Aufgabe dadurch gelöst, dass zumindest eine Hauptfläche der Sonotrode eine nicht zentrale Aufdickung aufweist, welche in einer Schnittansicht senkrecht zur Hauptfläche einen nicht auf der Radachse angeordneten, konvexen Bereich aufweist, wobei die Aufdickung in axialer Richtung eine Ausdehnung hat, die zwischen 0,25 x b und 2 x b und vorzugsweise zwischen 0,25 x b und 1 x b liegt. Unter einem konvexem Bereich wird ein Bereich verstanden, der entweder eine über die Hauptfläche vorstehende Fläche oder einen nach außen gewölbten Abschnitt hat. Mit anderen Worten wird unter einem konvexen Bereich ein Bereich verstanden, in dem es zwischen zwei Punkten auf der Grenzfläche einen Grenzflächenpunkt gibt, der außerhalb der Verbindungsstrecke der beiden Punkte liegt.

Diese Aufdickung ist nicht zentral, das heißt nicht zentrisch zu der Radachse angeordnet.

Umfangreiche Versuche haben nämlich gezeigt, dass das Vorsehen einer Aufdickung außerhalb der Radachse die Eigenfrequenz der Dreiecksmode stärker beeinflusst als die Eigenfrequenz der Hauptmode. Durch diese Maßnahme kann somit die Differenz zwischen Dreiecksfrequenz und Hauptfrequenz vergrößert werden.

In einer bevorzugten Ausführungsform weist die Aufdickung einen Scheitelpunkt oder eine Scheitelfläche auf, an den bzw. an die eine Tangente senkrecht zur Achse verläuft. Dabei ist vorzugsweise der Scheitelpunkt bzw. die Scheitelfläche von der Siegelfläche beabstandet angeordnet.

Zwar ist es grundsätzlich möglich, dass die Aufdickung in Umfangsrichtung lediglich abschnittsweise ausgebildet wird, die größten Effekte werden jedoch erreicht, wenn die Aufdickung rotationssymmetrisch zur Radachse ausgebildet ist. Mit anderen Worten weist zumindest eine Hauptfläche eine im Wesentlichen ringförmige Aufdickung auf.

In einer besonders bevorzugten Ausführungsform ist die Aufdickung mindestens 0,1 x d und vorzugsweise mindestens 0,15 x d von der Radachse beabstandet angeordnet. Versuche haben gezeigt, dass die Anordnung der Aufdickung nicht zu nahe an der Radachse angeordnet sein sollte, da sonst die Hauptfrequenz durch die Anordnung der Aufdickung beeinflusst wird, was jedoch nicht gewünscht ist.

In einer weiteren bevorzugten Ausführungsform ist vorgesehen, dass die Aufdickung mindestens 0,05 x d und vorzugsweise mindestens 0,17 x d von der Siegelfläche beabstandet angeordnet ist. Versuche haben gezeigt, dass die Aufdickung nicht zu nahe an der Siegelfläche angeordnet sein sollte, um einen möglichst ausgeprägten erfindungsgemäßen Effekt zu erzeugen.

In einer weiteren bevorzugten Ausführungsform ist vorgesehen, dass die Aufdickung in radialer Richtung eine Ausdehnung c von mindestens 0,1 x d, besonders bevorzugt von mindestens 0,2 x d und am besten zwischen 0,2 x d und 0,25 x d hat.

Beispielsweise könnte die Aufdickung in radialer Richtung eine Ausdehnung c von mindestens 18 mm, besonders bevorzugt von mindestens 22 mm und am besten zwischen 22 und 30 mm haben.

Beispielsweise könnte die Aufdickung in axialer Richtung eine Ausdehnung haben, die zwischen 2 mm und 10 mm beträgt.

Weitere Vorteile, Merkmale und Anwendungsmöglichkeiten der vorliegenden Erfindung werden deutlich anhand der folgenden Beschreibung bevorzugter Ausführungsformen. Es zeigen:
- Figur 1: eine schematische Darstellung einer Ultraschallbearbeitungsvorrichtung des Standes der Technik,
- Figur 2: eine schematische Darstellung einer Dreiecksmode,
- Figur 3: eine schematische Darstellung des Spannungsverlaufs innerhalb einer radialschwingenden Sonotrode des Standes der Technik über die Position entlang eines Durchmessers,
- Figur 4: eine schematische Darstellung des in Figur 3 gezeigten Spannungsverlaufs für die Dreiecksmode,
- Figuren 5a und 5b: eine Schnittansicht und eine perspektivische Ansicht einer ersten Ausführungsform der Erfindung und
- Figuren 6a und 6b: eine Schnittansicht und eine perspektivische Ansicht einer zweiten Ausführungsform der Erfindung.

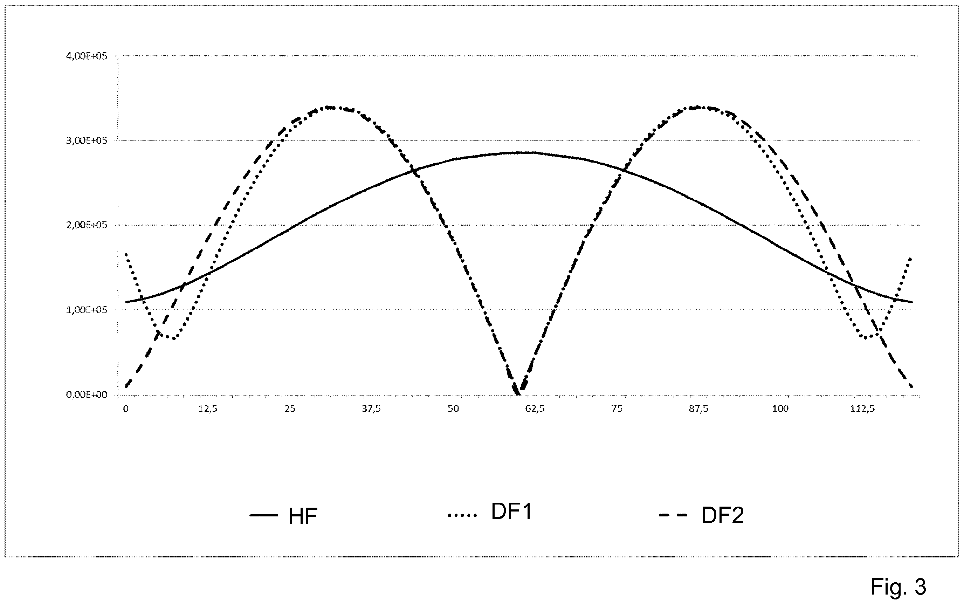

In Figur 3 ist die berechnete Spannung im Material innerhalb einer scheibenförmigen Sonotrode entlang eines Schnittes entlang eines Durchmessers für eine Anregung mit der Hauptfrequenz (HF) und entlang zweier Schnitte einer Anregung mit der Dreiecksfrequenz (DF1, DF2) gezeigt. Die Berechnung erfolgte für eine idealisierte Scheibenform. In der Praxis wird die Sonotrode jedoch zumindest axial angeformte Anschlussstücke für den Anschluss des Konverters aufweisen. Es ist jedoch für die tatsächliche Form der Sonotrode kein qualitativ anderer Spannungsverlauf zu erwarten.

Die auf der Ordinate aufgetragenen Spannungswerte sind in willkürlichen Einheiten angegeben, da es für die vorliegende Erfindung nicht auf die Größe der Spannung, sondern nur auf den qualitativen Spannungsverlauf innerhalb der Sonotrode ankommt.

Man erkennt, dass für die Hauptfrequenz (HF) die Spannung im Bereich der Siegelflächen am geringsten ist und sich in Richtung der im vorliegenden Fall bei 60 mm liegenden Radachse am stärksten ausgeprägt ist. Da bei einer Anregung der Sonotrode mit der Hauptfrequenz sich im Material eine stehende Zylinderwelle mit einem Schwingungsknoten auf der Radachse und einem Schwingungsmaximum auf der Siegelfläche ausbildet, ist dies auch sofort einsichtig. Die Siegelfläche kann frei schwingen, so dass sich hier keine nennenswerten Spannungen ausbilden, während der Bereich unmittelbar um die Radachse kaum schwingt und daher erhöhten Spannungen im Material ausgesetzt ist.

Da die Hauptfrequenz eine homogene Radialschwingung ist, d.h. die Schweißfläche zu jedem Zeitpunkt zylinderförmig ist, ist der Spannungsverlauf auch nicht von der konkreten Anordnung des betrachteten Schnitts abhängig.

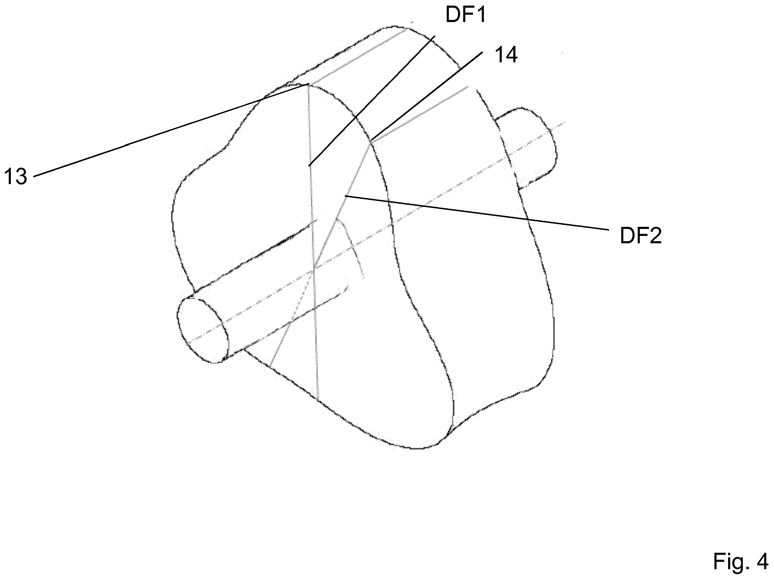

Für die Dreiecksfrequenz ist dies jedoch nicht zutreffend, da sich die Schweißfläche ungleichförmig verformt. Der Spannungsverlauf hängt daher von der Wahl des Schnittes durch die Sonotrode ab, wie schematisch in Figur 4 dargestellt ist. Der Spannungsverlauf entlang einer Linie (DF1), die zwei gegenüberliegende Schwingungsmaxima 13 verbindet, unterscheidet sich von dem Spannungsverlauf entlang einer Linie (DF2), die zwei gegenüberliegende Schwingungsminima verbindet.

Diese Spannungsverläufe sind ebenfalls in Figur 3 eingetragen. Sie unterscheiden sich deutlich vom Spannungsverlauf der Hauptfrequenz. Hier ist die geringste Spannung, nämlich eine Spannung von nahezu Null, im Bereich der Radachse (60 mm). In Richtung Siegelfläche durchläuft die Spannung ein Maximum. In der Nähe der Siegelfläche ist der Spannungsverlauf in Umfangsrichtung nicht mehr homogen. Im Bereich der Schwingungsknoten ist die Spannung an der Siegelfläche nahezu Null, während sie in Richtung der Schwingungsmaxima ansteigt.

Man erkennt, dass es Bereiche gibt, die im gezeigten Beispiel zwischen etwa 10 und 42,5 mm bzw. zwischen 75 und 112,5 mm liegen, in denen eine Anregung mit der Dreiecksfrequenz eine größere Materialspannung zeigt als eine Anregung mit der Hauptfrequenz. Daher wird die radförmige Sonotrode in den Bereichen, in denen die Materialspannung für eine Anregung mit der Dreiecksfrequenz höher ist als für eine Anregung mit der Hauptfrequenz verdickt. Eine solche Aufdickung führt zwangsläufig zu einer Veränderung der Eigenfrequenzen der Sonotrode. Aufgrund der gewählten Positionierung der Aufdickung wird jedoch die Dreiecksfrequenz stärker verändert als die Hauptfrequenz.

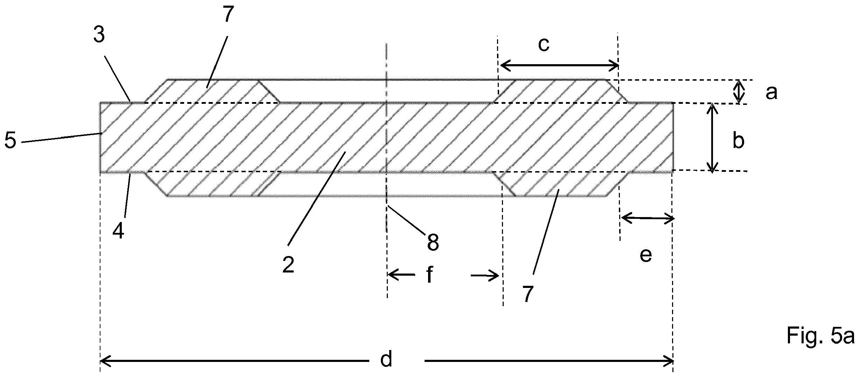

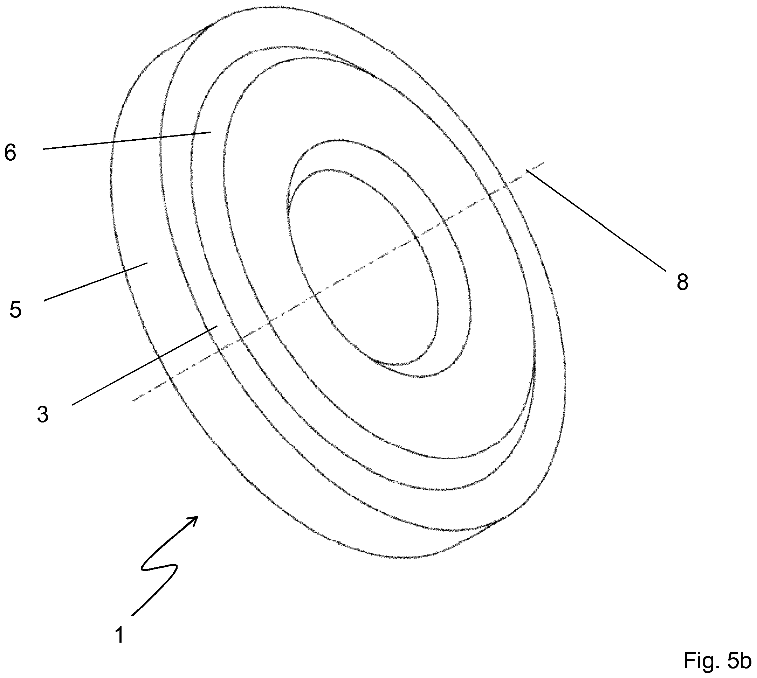

In den Figuren 5a und 5b ist daher eine erste erfindungsgemäße Ausführungsform einer Sonotrode 1 gezeigt. Figur 5b zeigt eine perspektivische Ansicht und Figur 5a eine Schnittansicht. Diese Sonotrode besteht aus einem radförmigen Abschnitt 2 mit zwei Hauptflächen 3 und 4, welche über eine umlaufende Siegelfläche 5 miteinander verbunden sind. Die Siegelfläche 5 hat eine Breite b. Die radförmige Sonotrode 1 hat einen Durchmesser d. Erfindungsgemäß weist die Sonotrode zwei Aufdickungen 6, 7 auf gegenüberliegenden Hauptflächen 3, 4 auf. Diese Aufdickungen sind jeweils rotationssymmetrisch zur Radachse 8 und spiegelsymmetrisch zu einer senkrecht zur Radachse 8 verlaufende Spiegelebene ausgebildet.

Die Aufdickung hat in axialer Richtung eine Höhe a und in radialer Richtung eine Ausdehnung c.

In den Fällen, in denen die Aufdickung keine parallel zur Radachse 8 verlaufende Flanke aufweist, wird die radiale Breite c von den Punkten gemessen, in denen die Aufdickung die halbe axiale Höhe a erreicht. Mit anderen Worten wird dann die Breite bei halber Höhe als Breite der Aufdickung festgelegt.

Die Aufdickung ist von der Siegelfläche 5 um einen Abstand e beabstandet, der in der gezeigten Ausführungsform etwa 0,17 x d beträgt. Des Weiteren ist die Aufdickung mit einem Abstand f von der Radachse 8 beabstandet, der im gezeigten Beispiel etwa 0,125 x d beträgt.

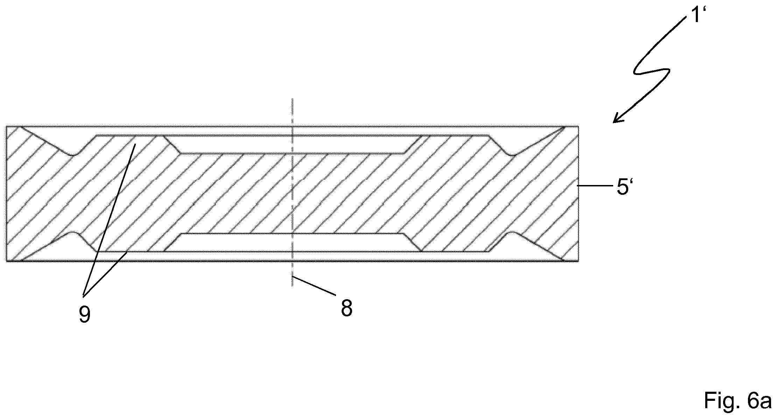

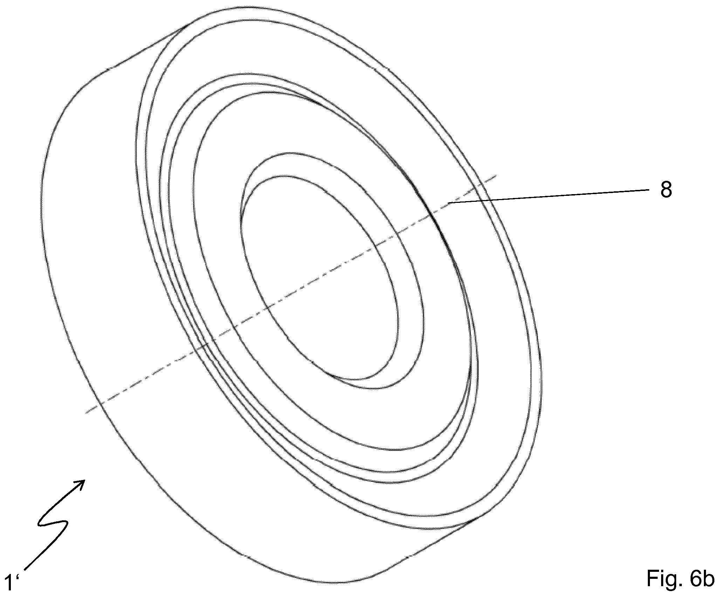

In den Figuren 6a und 6b ist eine zweite Ausführungsform einer Sonotrode gezeigt. Figur 6b zeigt eine perspektivische Ansicht und Figur 6a eine Schnittansicht. Hier ist berücksichtigt, dass häufig radförmige Sonotroden eine sich in Richtung der Siegelfläche 5' hin erweiternde Breite in axialer Richtung aufweisen. Auch hier kann durch eine geschickte Anordnung einer Aufdickung 9 der Abstand zwischen Dreiecksfrequenz und Hauptfrequenz vergrößert werden.

### Bezugszeichenliste

- 1: radförmige Sonotrode
- 2: radförmiger Abschnitt
- 3, 4: Hauptflächen
- 5, 5': Siegelfläche
- 6, 7, 9: Aufdickung der Sonotrode
- 8: Radachse
- 10: Ultraschallschweißanlage
- 11: Gegenwerkzeug
- 12: Sonotrode
- 13: Schwingungsmaxima
- 14: Schwingungsminima
- 15: Materialbahn

## Patentansprüche

1. Sonotrode mit einem radförmigen Abschnitt mit einer Radachse und einem Durchmesser d, der zwei im wesentlichen kreisförmige Hauptflächen und eine, die Hauptflächen verbindende, im wesentlichen zylinderförmige Siegelfläche der Breite b aufweist, **dadurch gekennzeichnet, dass** zumindest eine Hauptfläche eine nicht zentrale Aufdickung aufweist, welche in einer Schnittansicht senkrecht zur Hauptfläche einen nicht auf der Radachse angeordneten, konvexen Bereich aufweist, wobei die Aufdickung in axialer Richtung eine Ausdehnung hat, die zwischen 0,25 x b und 2 x b und vorzugsweise zwischen 0,25 x b und 1 x b liegt.

2. Sonotrode nach Anspruch 1, **dadurch gekennzeichnet, dass** die Aufdickung einen Scheitelpunkt oder eine Scheitelfläche aufweist, an den bzw. die eine Tangente senkrecht zur Achse verläuft.

3. Sonotrode nach Anspruch 1 oder 2, **dadurch gekennzeichnet, dass** die Aufdickung rotationssymmetrisch zur Radachse ausgebildet ist.

4. Sonotrode nach einem der Ansprüche 1 bis 3, **dadurch gekennzeichnet, dass** die Aufdickung mindestens 0,1 x d und vorzugsweise mindestens 0,15 x d von der Radachse beabstandet angeordnet ist.

5. Sonotrode nach einem der Ansprüche 1 bis 4, **dadurch gekennzeichnet, dass** die Aufdickung mindestens 0,05 x d und vorzugsweise mindestens 0,17 x d von der Siegelfläche beabstandet angeordnet ist.

6. Sonotrode nach einem der Ansprüche 1 bis 5, **dadurch gekennzeichnet, dass** die Aufdickung in radialer Richtung eine Ausdehnung c von mindestens 0,1 x d, besonders bevorzugt von mindestens 0,2 x d und am besten zwischen 0,2 x d und 0,25 x d hat.

7. Sonotrode nach einem der Ansprüche 1 bis 6, **dadurch gekennzeichnet, dass** das Verhältnis der Breite b der Siegelfläche zur axialen Ausdehnung a der Aufdickung mindestens 0,1 und vorzugsweise mindestens 0,5 beträgt.

8. Sonotrode nach einem der Ansprüche 1 bis 7, **dadurch gekennzeichnet, dass** die Aufdickung in axialer Richtung eine Ausdehnung hat, die zwischen 2 mm und 10 mm beträgt.

9. Sonotrode nach einem der Ansprüche 1 bis 8, **dadurch gekennzeichnet, dass** an beiden Hauptflächen jeweils eine Aufdickung angeordnet ist, wobei vorzugsweise die Aufdickungen symmetrisch zu einer Ebene senkrecht zur Radachse angeordnet sind.

## Claims

1. A sonotrode with a wheel-shaped portion having a wheel axis and of a diameter d, which has two substantially circular main surfaces and a substantially cylindrical sealing surface of the width b, that connects the main surfaces, **characterised in that** at least one main surface has a non-central thickened portion which in a sectional view perpendicularly to the main surface has a convex region which is not arranged on the wheel axis, wherein in the axial direction the thickened portion is of an extent which is between 0.25 x b and 2 x b and preferably between 0.25 x b and 1 x b.

2. A sonotrode as set forth in claim 1 **characterised in that** the thickened portion has an apex point or an apex surface to which a tangent extends perpendicularly to the axis.

3. A sonotrode as set forth in claim 1 or claim 2 **characterised in that** the thickened portion is of a rotationally symmetrical configuration relative to the wheel axis.

4. A sonotrode as set forth in one of claims 1 through 3 **characterised in that** the thickened portion is arranged spaced from the wheel axis at at least 0.1 x d and preferably at least 0.15 x d.

5. A sonotrode as set forth in one of claims 1 through 4 **characterised in that** the thickened portion is arranged spaced from the sealing surface at at least 0.05 x d and preferably at least 0.17 x d.

6. A sonotrode as set forth in one of claims 1 through 5 **characterised in that** in the radial direction the thickened portion is of an extent c of at least 0.1 x d, particularly preferably at least 0.2 x d and best between 0.2 x d and 0.25 x d.

7. A sonotrode as set forth in one of claims 1 through 6 **characterised in that** the ratio of the width b of the sealing surface to the axial extent a of the thickened portion is at least 0.1 and preferably at least 0.5.

8. A sonotrode as set forth in one of claims 1 through 7 **characterised in that** in the axial direction the thickened portion is of an extent which is between 2 mm and 10 mm.

9. A sonotrode as set forth in one of claims 1 through 8 **characterised in that** a respective thickened portion is arranged at both main surfaces, wherein preferably the thickened portions are arranged symmetrically relative to a plane perpendicular to the wheel axis.

## Revendications

1. Sonotrode comportant une partie en forme de roue dotée d'un axe de roue et ayant un diamètre d, qui comporte deux surfaces principales sensiblement circulaires et une surface de scellement sensiblement cylindrique de largeur b qui relie les surfaces principales, **caractérisée en ce qu'**au moins une surface principale présente une surépaisseur non centrale qui possède une zone convexe non disposée sur l'axe de roue et, selon une vue en coupe, perpendiculaire à la surface principale, la surépaisseur ayant, dans la direction axiale, une étendue qui se situe entre 0,25 x b et 2 x b, et de préférence entre 0,25 x b et 1 x b.

2. Sonotrode selon la revendication 1, **caractérisée en ce que** la surépaisseur présente un sommet ou une surface au sommet au niveau duquel ou de laquelle passe une tangente perpendiculaire à l'axe.

3. Sonotrode selon la revendication 1 ou 2, **caractérisée en ce que** la surépaisseur est réalisée à symétrie de rotation par rapport à l'axe de roue.

4. Sonotrode selon l'une des revendications 1 à 3, **caractérisée en ce que** la surépaisseur est espacée de l'axe de roue d'au moins 0,1 x d, et de préférence d'au moins 0,15 x d.

5. Sonotrode selon l'une des revendications 1 à 4, **caractérisée en ce que** la surépaisseur est espacée de la surface de scellement d'au moins 0,05 x d, et de préférence d'au moins 0,17 x d.

6. Sonotrode selon l'une des revendications 1 à 5, **caractérisée en ce que** la surépaisseur, dans la direction radiale, a une étendue c d'au moins 0,1 x d, de façon particulièrement préférée d'au moins 0,2 x d, et le plus préférablement comprise entre 0,2 x d et 0,25 x d.

7. Sonotrode selon l'une des revendications 1 à 6, **caractérisée en ce que** le rapport de la largeur b de la surface de scellement à l'étendue axiale a de la surépaisseur est d'au moins 0,1, et de préférence d'au moins 0,5.

8. Sonotrode selon l'une des revendications 1 à 7, **caractérisée en ce que** la surépaisseur a une étendue, dans la direction axiale, comprise entre 2 mm et 10 mm.

9. Sonotrode selon l'une des revendications 1 à 8, **caractérisée en ce qu'**une surépaisseur est disposée respectivement au niveau des deux surfaces principales, les surépaisseurs étant de préférence disposées symétriquement à un plan perpendiculaire à l'axe de roue.
